# FASCICULE DE BREVET EUROPEEN

(11) **EP 4 350 636 B1**
(45) Date de publication et mention de la délivrance du brevet: **02.12.2026**
(21) Numéro de dépôt: 22306478.3
(22) Date de dépôt: 04.10.2022
(51) Int. Cl.: G06T 7/73, G06T 19/00, G06T 19/20

(54) **PASSERELLE TEMPS RÉEL ENTRE UN ENVIRONNEMENT VIRTUEL ET UN ENVIRONNEMENT RÉEL**
ECHTZEIT-GATEWAY ZWISCHEN EINER VIRTUELLEN UMGEBUNG UND EINER REALEN UMGEBUNG
REAL-TIME GATEWAY BETWEEN A VIRTUAL ENVIRONMENT AND A REAL ENVIRONMENT

(43) Date de publication de la demande: 10.04.2024
(73) Titulaire: ATOS FRANCE, 95870 Bezons (FR)
(72) Inventeur: MORIN, Gabriel, 95130 FRANCONVILLE (FR); CHIRON, Loick, 63000 CLERMONT-FERRAND (FR); DE DOMENICO, Julien, 63360 SAINT BEAUZIRE (FR); SÜTYEMEZ, Hasan, 24120 TERRASSON-LAVILLEDIEU (FR)
(74) Mandataire: Novagraaf Technologies

(56) Documents cités:
- US-A1- 2019 172 266
- US-A1- 2019 251 747

## Description

### [Domaine technique]

La présente invention se rapporte au domaine de la réalité augmentée et concerne plus particulièrement un procédé d'intégration en temps réel d'au moins un objet virtuel dans un flux vidéo généré par un équipement d'utilisateur ainsi qu'un tel équipement d'utilisateur.

### [Etat de la technique antérieure]

De nos jours, il est connu d'utiliser des applications informatiques pour smartphones ou ordinateurs qui permettent d'ajouter des objets dans des images et obtenir ainsi une vue en réalité augmentée.

Certaines applications connues permettent de détourer une photo d'un objet et d'insérer l'objet ainsi détouré sous la forme d'un élément 2D dans une page ou une image. D'autres applications permettent de balayer l'environnement réel avec une caméra, par exemple celle d'un smartphone, pour obtenir une image étendue de la scène réelle, puis d'intégrer dans ladite image des éléments 3D prédéfinis disponibles dans une bibliothèque numérique. Le document US2019/172266A1 concerne un système de placement et de rendu d'objets virtuels dans un environnement réel d'un premier utilisateur. Un deuxième utilisateur distant coordonne des tâches impliquant des interactions physiques avec un objet cible situé dans l'environnement réel du premier utilisateur. Le système associé au premier utilisateur reçoit une instruction d'afficher un marqueur virtuel à une position d'un objet cible spécifiée par le deuxième utilisateur dans un modèle 3D d'au moins une portion de l'environnement du premier utilisateur. Le premier système détermine à partir de l'instruction une position du marqueur virtuel dans le premier environnement par alignement avec une ou plusieurs des ancres du deuxième environnement. Le document US2019/251747A1 concerne un système de réalité augmentée permettant de présenter des informations relatives à un véhicule à un technicien en charge d'en effectuer la maintenance. Le technicien est à l'intérieur de l'habitacle du véhicule et pointe une caméra d'un dispositif de rendu de réalité augmentée vers le tableau de bord du véhicule de sorte que la vue capturée comprenne un marqueur physique, préalablement placé à une position donnée du tableau de bord, spécifiée dans un modèle virtuel associé au type de véhicule. La présence de ce marqueur physique dans la vue est ensuite exploitée pour déterminer une position et une orientation du dispositif de rendu dans le véhicule, puis pour superposer une image d'un objet cible (par exemple un faisceau de câbles) à la vue réelle du tableau de bord affichée par le dispositif de rendu.

Un inconvénient de ces solutions réside dans le fait que les objets ou éléments intégrés dans les images sont statiques. Ainsi, l'utilisateur ne peut pas visualiser une scène réelle sous différents angles sans avoir à replacer les objets.

Il existe donc un besoin d'une solution simple et efficace permettant de remédier au moins en partie à ces inconvénients.

### [Exposé de l'invention]

L'invention est décrite dans les revendications annexées et concerne un procédé d'intégration en temps réel d'au moins un objet virtuel dans un flux vidéo généré par un équipement d'utilisateur et représentant un environnement réel, un équipement d'utilisateur à cette fin, et un système de réalité augmentée comprenant l'équipement d'utilisateur.

L'invention concerne tout d'abord un procédé d'intégration en temps réel d'au moins un objet virtuel dans un flux vidéo généré par un équipement d'utilisateur et représentant un environnement réel, ledit objet virtuel étant défini dans un environnement virtuel et étant caractérisé par sa position dite « virtuelle », ladite position virtuelle étant définie par rapport à un marqueur virtuel placé dans ledit environnement virtuel, ledit procédé comprenant les étapes, mises en oeuvre par ledit équipement d'utilisateur, de :
- calcul de la position dite « réelle », dans l'environnement réel, d'une représentation de l'au moins un objet virtuel par rapport à une position de référence prédéterminée correspondant, dans l'environnement réel, à la position du marqueur virtuel dans l'environnement virtuel,
- intégration de la représentation de l'au moins un objet virtuel dans un flux vidéo généré à la position réelle calculée,
- affichage du flux vidéo de sorte que ladite représentation apparaisse en temps réel sur les images du flux vidéo généré à la position réelle calculée.

Le marqueur virtuel correspond à l'origine d'un repère spatial tridimensionnel dans l'environnement virtuel tandis que la position de référence prédéterminée correspond à l'origine d'un repère spatial tridimensionnel dans l'environnement réel. Le marqueur virtuel permet ainsi de définir un repère virtuel associé à un repère réel défini par rapport à la position de référence prédéterminée, ce qui permet à la fois d'établir une passerelle continue (i.e. en temps réel) entre l'environnement virtuel et l'environnement réel et d'obtenir une précision importante du placement des représentations des objets virtuels dans les images du flux vidéo de la scène réelle. En particulier, l'intégration de la représentation des objets virtuels dans le flux vidéo en temps réel permet d'afficher la scène réelle en réalité augmentée dynamique, c'est-à-dire que les mouvements de l'utilisateur sont pris en compte pour placer les objets virtuels sur les images du flux vidéo à chaque instant et non seulement statiquement sur une image.

Afin d'afficher la scène réelle comportant la représentation du ou des objets virtuels, l'équipement d'utilisateur peut être muni d'une application de réalité augmentée existante telle que, par exemple, l'application ARCore^{®} de Google^{®}. Par réalité augmentée, il est entendu la superposition d'éléments sur des images représentant une scène réelle.

De manière avantageuse, le procédé peut être mis en oeuvre avec plusieurs environnements virtuels générés (i.e. plusieurs scènes virtuelles) pour plusieurs environnements réels (par exemple plusieurs pièces d'une maison, plusieurs magasins, etc.) afin de permettre à l'utilisateur de l'équipement d'utilisateur d'ajouter des objets virtuels adaptés à chaque environnement réel.

Selon un aspect de l'invention, le procédé comprend une phase préliminaire comportant les étapes de :
- génération d'un modèle 3D représentant l'environnement virtuel,
- placement d'un marqueur virtuel dans l'environnement virtuel généré,
- placement d'un marqueur réel dans l'environnement réel à l'emplacement correspondant à celui du marqueur virtuel dans l'environnement virtuel,
- génération d'au moins une image de l'environnement réel correspondant à l'environnement virtuel et comportant le marqueur réel,
- détection d'un motif correspondant au moins à une partie du marqueur réel dans l'au moins une image générée afin de localiser le marqueur réel, le motif étant prédéfini dans l'application,
- détermination de la position du motif détecté comme étant la position de référence de l'environnement réel.

La détection d'un motif correspondant à au moins une partie du marqueur réel dans l'image prise permet de savoir où se situe l'utilisateur dans l'environnement réel, par rapport au marqueur réel, pour pouvoir par la suite intégrer dynamiquement les objets 3D de l'environnement virtuel dans le flux vidéo.

Le marqueur doit être visible pour la phase préliminaire de détermination de la position de référence réelle. Plusieurs marqueurs peuvent être utilisés afin d'assurer la précision sur de grandes surfaces.

Le marqueur réel peut par exemple être un objet, de préférence à multiples formes anguleuses permettant la création de multiples points de repère pour la reconnaissance.

Le marqueur réel peut par exemple être une étiquette ou une affiche identifiable par l'équipement d'utilisateur sur les images du flux vidéo.

De préférence, le marqueur réel est noir et blanc afin de maximiser le contraste et permettre ainsi de le repérer plus aisément en filtrant la lumière et éventuellement en supprimant des objets devant le marqueur réel.

Dans un mode de réalisation, le procédé comprend une étape de maillage de l'espace par création automatique de marqueurs supplémentaires à partir du marqueur réel initial afin de permettre de gérer les problèmes de stabilité due à une trop grande distance à un marqueur réel unique. En effet, une dérive sur la position d'un marqueur réel unique pourrait se produire, par exemple de l'ordre de 20 cm pour 4 à 5 mètres de distance, ce qui dégraderait le rendu de la réalité augmentée.

Avantageusement, la génération de l'environnement virtuel est réalisée via une application dédiée, de préférence installée sur l'équipement d'utilisateur, ou en scannant l'environnement réel pour le virtualiser, de préférence via l'équipement d'utilisateur.

Selon un autre aspect de l'invention, le procédé comporte une phase de conception comprenant l'aménagement de la scène virtuelle générée par l'ajout d'un ou plusieurs objets virtuels.

Un aspect essentiel de l'invention est que le procédé comprend l'obtention d'au moins une donnée relative à au moins un objet réel ou virtuel et l'affichage de l'au moins une donnée avec la représentation de l'objet réel ou virtuel dans le flux vidéo, par exemple de manière superposée ou adjacente. L'au moins une donnée relative à au moins un objet peut être obtenue dans une base de données ou bien reçue de l'objet lui-même. Par exemple, le prix d'un objet, réel ou virtuel, peut être affiché sur ou à côté de l'objet dans les images du flux vidéo. Par exemple encore, dans le cas d'un objet réel connecté, l'au moins une donnée peut être envoyée par l'objet connecté à l'équipement d'utilisateur et afficher par l'équipement d'utilisateur sur les images du flux vidéo.

Un aspect essentiel de l'invention est aussi que le procédé comprend la détection d'un objet réel ajouté ou déplacé dans l'environnement réel, la détermination de la position réelle de l'objet réel ajouté ou déplacé par rapport à une position de référence prédéterminée correspondant dans l'environnement réel au marqueur virtuel de l'environnement virtuel, la détermination de la position virtuelle correspondant, dans l'environnement virtuel, à la position réelle déterminée, la modélisation de l'objet virtuel à partir de l'objet réel (si l'objet a été ajouté et/ou n'était pas modélisé) et l'intégration de l'objet virtuel modélisé dans l'environnement virtuel à la position virtuelle déterminée.

Un aspect essentiel de l'invention est finalement que la détection de l'objet réel ajouté ou déplacé dans l'environnement réel est réalisée en utilisant un module d'intelligence artificielle pour lier l'objet à un modèle d'objet 3D préexistant dans le modèle 3D d'environnement, ou un code sur l'objet, ou en scannant l'objet pour créer le modèle virtuel de l'objet ou par toute méthode existante (par exemple en utilisant la reconnaissance des pixels).

Dans une forme de réalisation, l'obtention de la position de l'objet réel ajouté ou déplacé est réalisée à l'aide d'un module de géolocalisation ou par la création d'un nouveau repère. La géolocalisation peut par exemple être de la géolocalisation par satellite (GPS ou autre système). La géolocalisation peut être par exemple basée sur de l'ancrage spatial dans un repère monde. La géolocalisation peut être de type géolocalisation en intérieur (beacon, wifi, RFID ou tout type de réseau par ondes). La géolocalisation peut par exemple être basée sur des nouveaux marqueurs. La géolocalisation peut par exemple être basée sur de la vision par ordinateur.

L'invention concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en oeuvre un procédé tel que présenté ci-avant.

L'invention concerne également un équipement d'utilisateur pour l'intégration en temps réel d'au moins un objet virtuel dans un flux vidéo généré par ledit équipement d'utilisateur et représentant un environnement réel, ledit objet virtuel étant défini dans un environnement virtuel et étant caractérisé par sa position dite « virtuelle », ladite position virtuelle étant définie par rapport à un marqueur virtuel placé dans ledit environnement virtuel, l'équipement d'utilisateur étant configuré pour :
- calculer la position dite « réelle », dans l'environnement réel, d'une représentation de l'au moins un objet virtuel par rapport à une position de référence prédéterminée correspondant, dans l'environnement réel, à la position du marqueur virtuel dans l'environnement virtuel,
- intégrer la représentation de l'au moins un objet virtuel dans un flux vidéo généré à la position réelle calculée,
- afficher le flux vidéo de sorte que ladite représentation apparaisse en temps réel sur les images du flux vidéo généré à la position réelle calculée.

Dans une forme de réalisation, l'équipement d'utilisateur est configuré pour calculer ou recevoir la position virtuelle de l'au moins un objet virtuel.

Selon un aspect de l'invention, l'équipement d'utilisateur est configuré pour, dans une phase préliminaire :
- générer un modèle 3D représentant l'environnement virtuel,
- placer un marqueur virtuel dans l'environnement virtuel généré,
- générer au moins une image de l'environnement réel correspondant à l'environnement virtuel et comportant un marqueur réel à l'emplacement correspondant à celui du marqueur virtuel dans l'environnement virtuel,
- détecter un motif correspondant au moins à une partie du marqueur réel dans l'au moins une image générée afin de localiser le marqueur réel, le motif étant prédéfini dans l'application,
- déterminer la position du motif détecté comme étant la position de référence de l'environnement réel.

Avantageusement, l'équipement d'utilisateur comprend une application dédiée configurée pour générer l'environnement virtuel et/ou est configuré pour générer l'environnement virtuel via un scan de l'environnement réel correspondant.

Avantageusement encore, l'équipement d'utilisateur est configuré pour recevoir au moins une donnée relative à au moins un objet réel ou virtuel et pour afficher l'au moins une donnée avec la représentation de l'objet virtuel dans le flux vidéo, par exemple de manière superposée ou adjacente. L'au moins une donnée relative à au moins un objet peut être obtenue dans une base de données ou bien reçue de l'objet lui-même. Par exemple, le prix d'un objet, réel ou virtuel, peut être affiché sur ou à côté de l'objet dans les images du flux vidéo. Par exemple encore, dans le cas d'un objet réel connecté, l'au moins une donnée peut être envoyée par l'objet connecté à l'équipement d'utilisateur et afficher par l'équipement d'utilisateur sur les images du flux vidéo.

Un aspect essentiel de l'invention est que l'équipement d'utilisateur est configuré pour détecter un objet réel ajouté ou déplacé dans l'environnement réel, pour déterminer la position réelle de l'objet réel ajouté ou déplacé par rapport à une position de référence prédéterminée correspondant dans l'environnement réel au marqueur virtuel de l'environnement virtuel, pour déterminer la position virtuelle correspondant, dans l'environnement virtuel, à la position réelle déterminée, pour modéliser l'objet virtuel à partir de l'objet réel et pour intégrer l'objet virtuel modélisé dans l'environnement virtuel à la position virtuelle déterminée.

Il est aussi essentiel que l'équipement d'utilisateur est configuré pour détecter l'objet réel ajouté ou déplacé dans l'environnement réel en utilisant un module d'intelligence artificielle pour lier l'objet à un modèle d'objet 3D préexistant dans le modèle 3D d'environnement, ou en lisant un code sur l'objet (par exemple un QR code) ou en scannant l'objet pour créer le modèle virtuel de l'objet ou par toute méthode existante (par exemple en utilisant la reconnaissance des pixels).

Dans une forme de réalisation, l'équipement d'utilisateur est configuré pour obtenir la position de l'objet réel ajouté ou déplacé par un module de géolocalisation ou par la création d'un nouveau repère. La géolocalisation peut être par exemple basée sur de l'ancrage spatial dans un repère monde. La géolocalisation peut être de type géolocalisation en intérieur (beacon, wifi, RFID ou tout type de réseau par ondes). La géolocalisation peut par exemple être basée sur des nouveaux marqueurs. La géolocalisation peut par exemple être basée sur de la vision par ordinateur.

De manière avantageuse, l'équipement d'utilisateur est configuré pour réaliser un maillage de l'espace par création automatique de marqueurs supplémentaires à partir du marqueur réel initial afin de permettre de gérer les problèmes de stabilité due à une trop grande distance à un marqueur réel unique.

L'invention concerne également un système de réalité augmentée comprenant au moins un marqueur réel disposé dans un environnement réel et un équipement d'utilisateur tel que présenté ci-avant.

Un aspect essentiel de l'invention est aussi qu'elle concerne un procédé d'intégration en temps réel d'au moins un objet virtuel dans un environnement virtuel à partir d'un flux vidéo généré par un équipement d'utilisateur et représentant un environnement réel correspondant audit environnement virtuel, ledit objet virtuel étant caractérisé dans l'environnement virtuel par sa position dite « virtuelle », ladite position virtuelle étant définie par rapport à un marqueur virtuel placé dans ledit environnement virtuel, ledit procédé comprenant les étapes, mises en oeuvre par ledit équipement d'utilisateur, de :
- détection d'un objet réel ajouté ou déplacé dans l'environnement réel,
- détermination de la position réelle de l'objet réel ajouté ou déplacé par rapport à une position de référence prédéterminée correspondant dans l'environnement réel au marqueur virtuel de l'environnement virtuel,
- détermination de la position virtuelle correspondant, dans l'environnement virtuel, à la position réelle déterminée,
- modélisation de l'objet virtuel à partir de l'objet réel si l'objet a été ajouté et/ou n'était pas modélisé,
- intégration de l'objet virtuel modélisé dans l'environnement virtuel à la position virtuelle déterminée.

Ce procédé selon l'invention permet de créer un jumeau numérique de l'environnement réel et de l'enrichir au gré des évolutions dudit environnement réel.

Il est finalement essentiel que la détection de l'objet réel ajouté ou déplacé dans l'environnement réel est réalisée en utilisant un module d'intelligence artificielle pour lier l'objet à un modèle d'objet 3D préexistant dans le modèle 3D d'environnement, ou un code sur l'objet, ou en scannant l'objet pour créer le modèle virtuel de l'objet ou par toute méthode existante (par exemple en utilisant la reconnaissance des pixels).

Dans un mode de réalisation, l'obtention de la position de l'objet réel ajouté ou déplacé est réalisée par un module de géolocalisation ou par la création d'un nouveau repère. La géolocalisation peut être par exemple basée sur de l'ancrage spatial dans un repère monde. La géolocalisation peut être de type géolocalisation en intérieur (beacon, wifi, RFID ou tout type de réseau par ondes). La géolocalisation peut par exemple être basée sur des nouveaux marqueurs. La géolocalisation peut par exemple être basée sur de la vision par ordinateur.

Dans un mode de réalisation, le procédé comprend une étape de maillage de l'espace par création automatique de marqueurs supplémentaires à partir du marqueur réel initial afin de permettre de gérer les problèmes de stabilité due à une trop grande distance à un marqueur réel unique. En effet, une dérive sur la position d'un marqueur réel unique pourrait se produire, par exemple de l'ordre de 20 cm pour 4 à 5 mètres de distance, ce qui dégraderait le rendu de la réalité augmentée.

Selon un aspect de l'invention, le procédé comprend une phase préliminaire comportant les étapes de :
- génération d'un modèle 3D représentant l'environnement virtuel,
- placement d'un marqueur virtuel dans l'environnement virtuel généré,
- placement d'un marqueur réel dans l'environnement réel à l'emplacement correspondant à celui du marqueur virtuel dans l'environnement virtuel,
- génération d'au moins une image de l'environnement réel correspondant à l'environnement virtuel et comportant le marqueur réel,
- détection d'un motif correspondant au moins à une partie du marqueur réel dans l'au moins une image générée afin de localiser le marqueur réel, le motif étant prédéfini dans l'application,
- détermination de la position du motif détecté comme étant la position de référence de l'environnement réel.

La détection d'un motif correspondant à au moins une partie du marqueur réel dans l'image prise permet de savoir où se situe l'utilisateur dans l'environnement réel, par rapport au marqueur réel, pour pouvoir par la suite intégrer dynamiquement les objets 3D de l'environnement virtuel dans le flux vidéo.

Le marqueur réel peut par exemple être un objet, de préférence à multiples formes anguleuses, ou une étiquette identifiable par l'équipement d'utilisateur sur les images du flux vidéo.

Avantageusement, la génération de l'environnement virtuel est réalisée via une application dédiée, de préférence installée sur l'équipement d'utilisateur, ou en scannant l'environnement réel pour le virtualiser, de préférence via l'équipement d'utilisateur.

Selon un autre aspect de l'invention, le procédé comporte une phase de conception comprenant l'aménagement de la scène virtuelle générée par l'ajout d'un ou plusieurs objets virtuels.

L'invention concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en oeuvre un procédé tel que présenté ci-avant.

L'invention concerne également un équipement d'utilisateur pour l'intégration en temps réel d'au moins un objet virtuel dans environnement virtuel à partir d'un flux vidéo généré par ledit équipement d'utilisateur et représentant un environnement réel correspondant audit environnement virtuel, ledit objet virtuel étant caractérisé dans l'environnement virtuel par sa position dite « virtuelle », ladite position virtuelle étant définie par rapport à un marqueur virtuel placé dans ledit environnement virtuel, l'équipement d'utilisateur étant configuré pour :
- détecter un objet réel ajouté ou déplacé dans l'environnement réel,
- déterminer la position réelle de l'objet réel ajouté ou déplacé par rapport à une position de référence prédéterminée correspondant dans l'environnement réel au marqueur virtuel de l'environnement virtuel,
- déterminer la position virtuelle correspondant, dans l'environnement virtuel, à la position réelle déterminée,
- modéliser l'objet virtuel à partir de l'objet réel si l'objet a été ajouté et/ou n'était pas modélisé,
- intégrer l'objet virtuel modélisé dans l'environnement virtuel à la position virtuelle déterminée.

De préférence, l'équipement d'utilisateur est configuré pour détecter l'objet réel ajouté ou déplacé dans l'environnement réel en utilisant un module d'intelligence artificielle pour lier l'objet à un modèle d'objet 3D préexistant dans le modèle 3D d'environnement, ou un code sur l'objet, ou en scannant l'objet pour créer le modèle virtuel de l'objet ou par toute méthode existante (par exemple en utilisant la reconnaissance des pixels).

Dans une forme de réalisation, l'équipement d'utilisateur est configuré pour obtenir la position de l'objet réel ajouté ou déplacé par un module de géolocalisation ou par la création d'un nouveau repère. La géolocalisation peut être par exemple basée sur de l'ancrage spatial dans un repère monde. La géolocalisation peut être de type géolocalisation en intérieur (beacon, wifi, RFID ou tout type de réseau par ondes). La géolocalisation peut par exemple être basée sur des nouveaux marqueurs. La géolocalisation peut par exemple être basée sur de la vision par ordinateur.

Dans une forme de réalisation, l'équipement d'utilisateur est configuré pour réaliser un maillage de l'espace par création automatique de marqueurs supplémentaires à partir du marqueur réel initial afin de permettre de gérer les problèmes de stabilité due à une trop grande distance à un marqueur réel unique.

Selon un aspect de l'invention, l'équipement d'utilisateur est configuré pour, dans une phase préliminaire :
- générer un modèle 3D représentant l'environnement virtuel,
- placer un marqueur virtuel dans l'environnement virtuel généré,
- générer au moins une image de l'environnement réel correspondant à l'environnement virtuel et comportant un marqueur réel à l'emplacement correspondant à celui du marqueur virtuel dans l'environnement virtuel,
- détecter un motif correspondant au moins à une partie du marqueur réel dans l'au moins une image générée afin de localiser le marqueur réel, le motif étant prédéfini dans l'application,
- déterminer la position du motif détecté comme étant la position de référence de l'environnement réel.

Avantageusement, l'équipement d'utilisateur comprend une application dédiée configurée pour générer l'environnement virtuel et/ou est configuré pour générer l'environnement virtuel via un scan de l'environnement réel correspondant.

L'invention concerne également un système de réalité augmentée comprenant au moins un marqueur réel disposé dans un environnement réel et un équipement d'utilisateur tel que présenté ci-avant.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig 1] La figure 1 illustre schématiquement un exemple d'environnement réel comportant une forme de réalisation du système selon l'invention.
[Fig 2] La figure 2 illustre schématiquement un exemple d'environnement virtuel correspondant à l'environnement réel de la figure 1.
[Fig 3] La figure 3 illustre schématiquement l'environnement virtuel de la figure 2 dans lequel des objets virtuels ont été ajoutés.
[Fig 4] La figure 4 illustre schématiquement un exemple d'image d'un flux vidéo généré selon l'invention et représentant l'environnement réel augmenté des objets virtuels.
[Fig 5] La figure 5 illustre schématiquement un mode de réalisation du procédé selon l'invention.

### [Description des modes de réalisation]

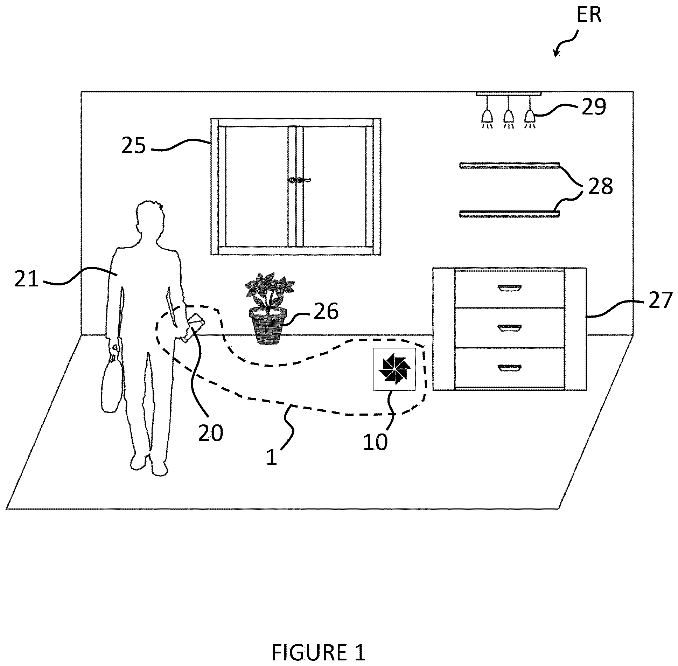

La figure 1 représente un exemple d'environnement réel ER comprenant une forme de réalisation du système 1 selon l'invention.

### Système 1

Le système 1 comprend un marqueur réel 10 et un équipement d'utilisateur 20 placés dans un environnement réel ER pouvant être intérieur (pièce, espace intérieur, ...) ou extérieur (jardin, rue, ...). Dans cet exemple, l'équipement d'utilisateur 20 est un smartphone porté par un utilisateur 21.

Toujours dans cet exemple, l'environnement réel ER est une chambre comprenant des objets réels de type fenêtre 25, pot de fleurs 26, commode 27, étagères 28, lampes 29.

### Marqueur réel 10

Le marqueur réel 10 est un élément remarquable placé dans l'environnement réel ER et possédant des caractéristiques identifiables aisément sur des images d'un flux vidéo.

Par exemple, le marqueur réel 10 peut se présenter sous la forme d'un objet ou d'une étiquette, notamment un tag. Dans le cas d'un objet, le marqueur réel 10 comporte de préférence une pluralité de formes anguleuses afin de l'identifier plus facilement dans un flux vidéo de l'environnement dans lequel il se trouve, notamment parmi divers objets.

De préférence, le marqueur réel 10 est, essentiellement, noir et blanc afin de maximiser le contraste et permettre ainsi de le repérer plus aisément en filtrant la lumière et éventuellement en supprimant des objets devant le marqueur réel 10.

Dans l'exemple de la figure 1, le marqueur réel 10 se présente sous la forme d'un panneau sur lequel est dessiné schématiquement un moulin à vent noir sur fond blanc.

### Equipement d'utilisateur 20

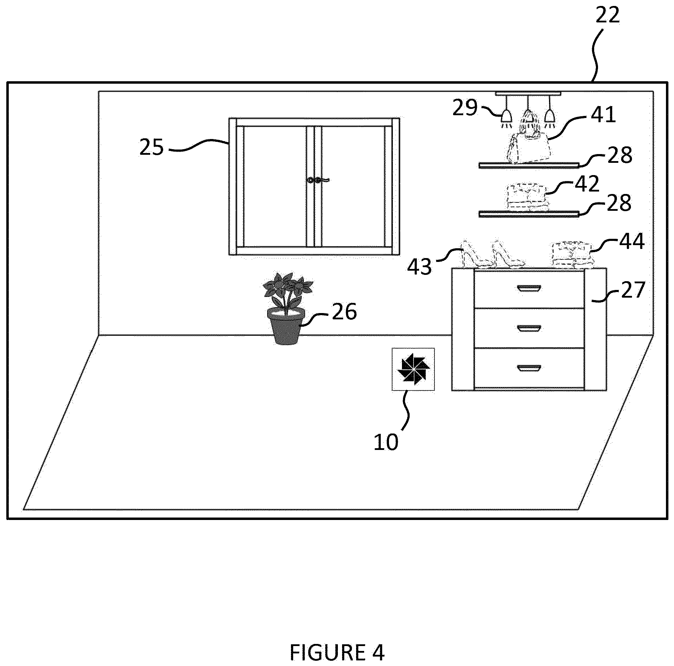

L'équipement d'utilisateur 20 peut être de type smartphone, tablette, lunettes connectées, ordinateur portable ou tout autre équipement adapté et configuré pour mettre en oeuvre les fonctions de l'invention. L'équipement d'utilisateur 20 comprend notamment au moins une caméra et un écran 22 d'affichage (figure 4).

L'équipement d'utilisateur 20 est configuré pour générer un flux vidéo représentant l'environnement réel ER. En d'autres termes, l'équipement d'utilisateur 20 est configuré pour générer une séquence d'images de l'environnement réel ER.

De préférence, l'équipement d'utilisateur 20 est configuré pour générer un modèle 3D d'environnement virtuel EV. Afin de générer le modèle 3D représentant l'environnement virtuel EV, l'équipement d'utilisateur 20 peut comprendre une application dédiée, connue en soi. En variante ou en complément, l'équipement d'utilisateur 20 peut être configuré pour générer l'environnement virtuel EV en scannant l'environnement réel ER correspondant de manière à obtenir un flux vidéo qui est ensuite virtualisé en formes 3D.

En variante ou en complément, le modèle 3D d'environnement virtuel EV peut être généré sur un équipement à distance, par exemple un ordinateur ou une tablette, puis envoyé à l'équipement d'utilisateur 20.

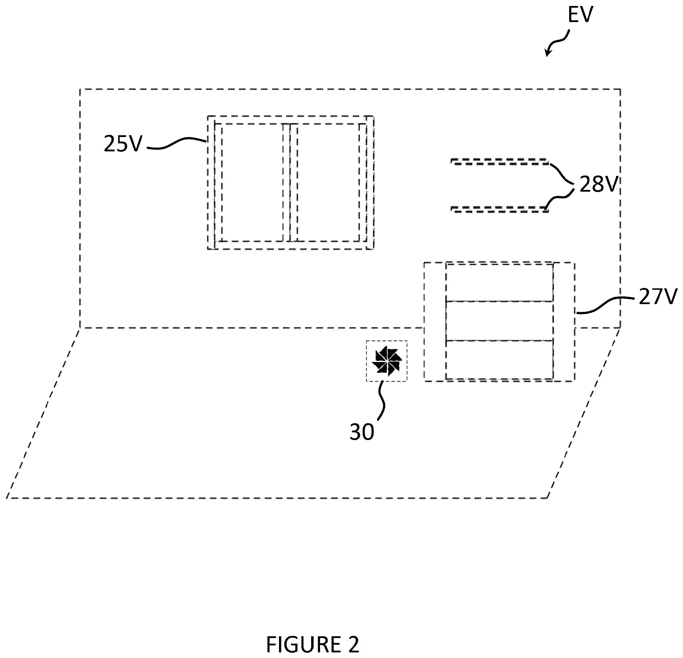

L'environnement virtuel EV représente une scène virtuelle 3D (figure 2) correspondant à une scène réelle de l'environnement réel ER (figure 1). La scène virtuelle peut représenter partiellement ou totalement la scène réelle. Par exemple, la scène virtuelle peut représenter une pièce d'un immeuble ou d'une maison, comme illustré sur la figure 2, une partie d'une usine ou d'un entrepôt, un espace extérieur, etc. Dans l'exemple d'environnement virtuel EV de la figure 2, seules les représentations virtuelles de la fenêtre 25V, de la commode 27V et des étagères 28V ont été générées mais aucunes représentations virtuelles du pot de fleurs 26 et des lampes 29 n'ont été générées, ceux-ci ayant été jugés comme étant des détails non nécessaires.

Toujours en référence à la figure 2, l'équipement d'utilisateur 20 est configuré pour placer au moins un marqueur virtuel 30 dans l'environnement virtuel EV généré ou pour permettre le placement d'au moins un marqueur virtuel 30 dans l'environnement virtuel EV généré. Le marqueur virtuel 30 constitue une référence dans l'environnement virtuel EV à partir de laquelle la position des objets virtuels de l'environnement virtuel EV, appelée « position virtuelle », peut être définie et à partir de laquelle lesdits objets virtuels peuvent être positionnés dans l'environnement virtuel EV. En d'autres termes, la position du marqueur virtuel 30 constitue l'origine d'un repère spatial tridimensionnel « virtuel » défini dans l'environnement virtuel EV. La position virtuelle de chaque objet virtuel peut être définie dans le repère spatial tridimensionnel virtuel à l'aide de coordonnées ou de tous moyens adaptés. Le marqueur virtuel 30 peut par exemple se présenter sous la forme d'une modélisation 3D d'un marqueur 2D, d'un objet texturé, de son maillage ou de son nuage de points.

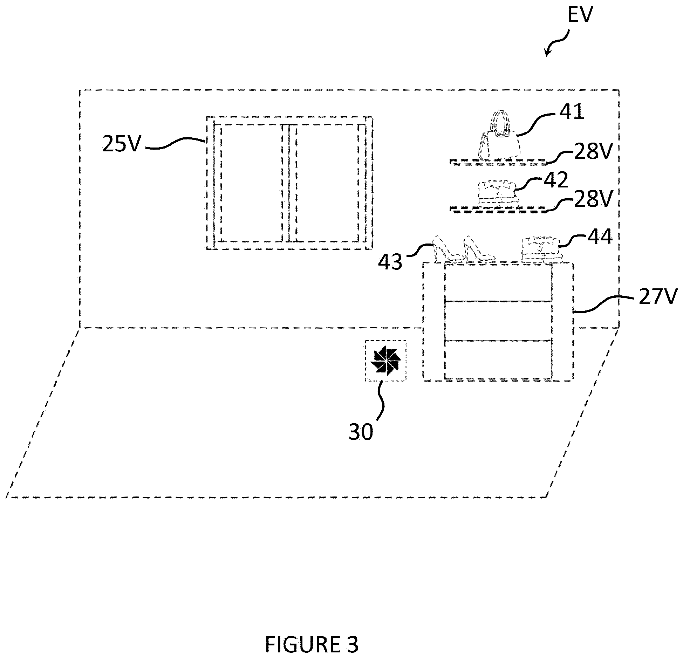

Dans l'exemple de la figure 3, des objets virtuels, qui sont à intégrer dans le flux vidéo, sont insérés dans l'environnement virtuel EV : un sac à main 41 placé sur la représentation virtuelle 28V de l'étagère 28 supérieure, une pile de chemisiers 42 placée sur la représentation virtuelle 28V de l'étagère 28 inférieure, une paire de chaussure 43 posée sur la partie gauche de la face supérieure de la représentation virtuelle 27V de la commode 27 et une pile de chemises 44 posée sur la partie gauche de la face supérieure de la représentation virtuelle 27V de la commode 27.

Plusieurs environnements virtuels EV peuvent être générés en parallèle pour que l'utilisateur 21 puisse naviguer de l'un à l'autre, chacun comprenant son propre marqueur virtuel 30 et ses propres objets virtuels 30. Dans ce cas, chaque environnement réel ER correspondant comprend au moins un marqueur réel 10.

L'équipement d'utilisateur 20 est configuré pour générer au moins une image de l'environnement réel ER correspondant à l'environnement virtuel EV et comportant le marqueur réel 10 à l'emplacement correspondant à celui du marqueur virtuel 30 dans l'environnement virtuel EV.

L'équipement d'utilisateur 20 est configuré pour détecter un motif correspondant au moins à une partie du marqueur réel 10 (ou au marqueur réel 10 en entier) dans l'au moins une image générée afin de localiser ledit marqueur réel 10. Le motif est prédéfini et stocké dans une zone mémoire de l'équipement d'utilisateur 20.

L'équipement d'utilisateur 20 est configuré pour déterminer la position du motif détecté dans l'au moins une image et définir ladite position déterminée comme étant la position de référence de l'environnement réel ER dans les images du flux vidéo représentant ledit environnement réel ER. La position de référence ainsi déterminée constitue l'origine d'un repère spatial tridimensionnel « réel » défini dans l'environnement réel ER, qui est l'équivalent du repère spatial tridimensionnel défini dans l'environnement virtuel EV. La position réelle correspondant à la position virtuelle de chaque objet virtuel peut être définie dans le repère spatial tridimensionnel réel à l'aide de coordonnées ou de tous moyens adaptés.

Dans une forme de réalisation, l'équipement d'utilisateur 20 est configuré pour placer les objets virtuels à intégrer dans le flux vidéo (sac à main 41, pile de chemisiers 42, paire de chaussure 43 et une pile de chemises 44) dans l'environnement virtuel EV généré et/ou pour permettre le placement, notamment par l'utilisateur 21 de l'équipement d'utilisateur 20, des objets virtuels dans l'environnement virtuel EV. La position de chaque objet virtuel 41, 42, 43, 44 peut être déterminée ou calculée dans l'environnement virtuel EV par l'équipement d'utilisateur 20. En variante ou en complément, la position de chaque objet virtuel 41, 42, 43, 44 peut être reçue, soit d'un autre équipement, soit d'une application embarquée sur l'équipement d'utilisateur 20 permettant le placement des objets virtuels 41, 42, 43, 44 et la détermination de leur position dans l'environnement virtuel EV.

L'équipement d'utilisateur 20 est configuré pour calculer, dans l'environnement réel ER, une position dite « réelle » définie par rapport à la position de référence prédéterminée et correspondant dans l'environnement réel ER à la position virtuelle de chaque objet virtuel 41, 42, 43, 44.

L'équipement d'utilisateur 20 est configuré pour intégrer une représentation de chaque objet virtuel 41, 42, 43, 44 en temps réel dans le flux vidéo généré, représentant l'environnement réel ER, à la position réelle calculée pour ledit objet virtuel 41, 42, 43, 44.

L'équipement d'utilisateur 20 est configuré pour afficher les images dudit flux vidéo de sorte que la représentation des objets virtuels 41, 42, 43, 44 apparaisse en temps réel sur l'écran 22 de l'équipement d'utilisateur 20, i.e. pendant qu'il filme la scène réelle.

Avantageusement, l'équipement d'utilisateur 20 est configuré pour recalculer la position des objets virtuels 41, 42, 43, 44 périodiquement, de préférence en continue (par exemple au moins une fois par seconde, voire de l'ordre de 10 à 100 fois par seconde) et en temps réel afin de positionner en permanence les objets virtuels 41, 42, 43, 44 dans les images du flux vidéo avec une précision importante.

Dans une forme de réalisation, en référence à la figure 4, l'équipement d'utilisateur 20 est configuré pour détecter un objet réel 25, 26, 27, 28, 29 ajouté ou déplacé dans l'environnement réel ER en utilisant un module d'intelligence artificielle (non représenté) permettant de lier l'objet réel 25, 26, 27, 28, 29 à un modèle d'objet 3D préexistant dans le modèle 3D d'environnement virtuel EV.

En variante ou en complément, l'équipement d'utilisateur 20 est configuré pour détecter un objet réel 25, 26, 27, 28, 29 ajouté ou déplacé dans l'environnement réel ER à l'aide d'un code placé sur l'objet, par exemple de type QR code.

En variante ou en complément, l'équipement d'utilisateur 20 est configuré pour détecter un objet réel 25, 26, 27, 28, 29 ajouté ou déplacé dans l'environnement réel ER en scannant ledit objet réel 25, 26, 27, 28, 29 afin de créer le modèle 3D de l'objet réel 25, 26, 27, 28, 29.

L'équipement d'utilisateur 20 est configuré pour déterminer la position réelle de l'objet réel 25, 26, 27, 28, 29 ajouté ou déplacé dans l'environnement réel ER, par rapport à la position de référence prédéterminée, en utilisant les images du flux vidéo.

Dans une forme de réalisation, l'équipement d'utilisateur 20 est configuré pour obtenir la position de l'objet réel 25, 26, 27, 28, 29 ajouté ou déplacé via un module de géolocalisation La géolocalisation peut être par exemple basée sur un système satellite (GPS ou autre) ou de l'ancrage spatial dans un repère monde. La géolocalisation peut être de type géolocalisation en intérieur (beacon, wifi, RFID ou tout type de réseau par ondes). En variante ou en complément, l'équipement d'utilisateur 20 est configuré pour obtenir la position de l'objet réel 25, 26, 27, 28, 29 ajouté ou déplacé par création d'un nouveau repère. La géolocalisation peut par exemple être basée sur des nouveaux marqueurs. En variante ou en complément, l'équipement d'utilisateur 20 est configuré pour obtenir la position de l'objet réel 25, 26, 27, 28, 29 ajouté ou déplacé en se basant sur de la vision par ordinateur.

L'équipement d'utilisateur comprend un processeur apte à mettre en oeuvre un ensemble d'instructions permettant de réaliser ces fonctions. Les fonctions de l'invention peuvent être regroupées dans une ou plusieurs applications installées sur l'équipement d'utilisateur 20.

L'équipement d'utilisateur 20 peut être configuré pour mettre en oeuvre le lien de l'environnement virtuel EV vers l'environnement réel ER (intégration d'objets virtuels dans le flux vidéo en temps réel) ou uniquement le lien de l'environnement réel ER vers l'environnement virtuel EV (ajout ou déplacement d'un objet réel dans l'environnement réel ER et mise à jour de l'environnement virtuel EV correspondant en temps réel) ou bien à la fois le lien de l'environnement virtuel EV vers l'environnement réel ER et le lien de l'environnement réel ER vers l'environnement virtuel EV (à tour de rôle ou bien simultanément).

### Exemple de mise en œuvre

Le procédé selon l'invention nécessite une phase d'initialisation PI permettant notamment de définir l'environnement virtuel EV et son repère de référence, l'environnement réel ER et son repère de référence ainsi que leur lien commun dans les images du flux vidéo.

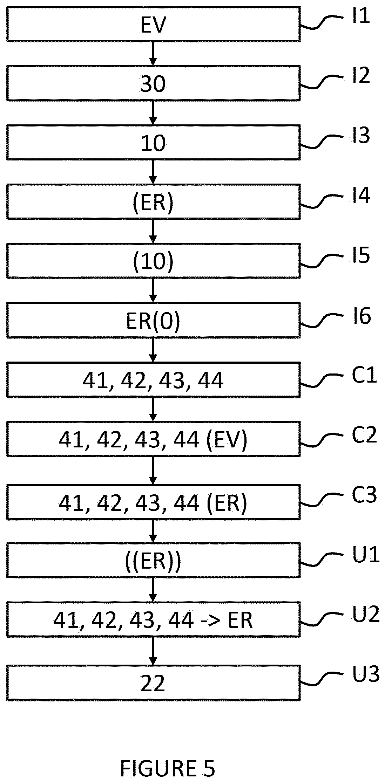

Tout d'abord, en référence à la figure 5, dans une étape I1, l'équipement d'utilisateur 20 génère (ou reçoit) un modèle 3D d'environnement virtuel EV représentant une scène virtuelle 3D (figure 2) correspondant à une scène réelle de l'environnement réel ER (figure 1). Par le terme « correspondant », il est entendu ici, comme indiqué précédemment, que la scène virtuelle représente au moins en partie la scène réelle, sans nécessairement que tous les détails de la scène réelle ne soient reproduits dans la scène virtuelle.

Dans une étape I2, en référence à la figure 2, un marqueur virtuel 30 est placé dans l'environnement virtuel EV afin de constituer l'origine d'un repère spatial tridimensionnel permettant de déterminer la position d'objets virtuels 41, 42, 43, 44 dans ledit environnement virtuel EV. Par exemple, le marqueur virtuel 30 peut être placé par l'utilisateur 21 de l'équipement d'utilisateur 20 via ledit équipement d'utilisateur 20, de préférence visuellement via l'écran 22 de l'équipement d'utilisateur 20.

Dans une étape I3, un marqueur réel 10 est placé dans l'environnement réel ER correspondant à l'environnement virtuel EV, à l'emplacement correspondant à celui du marqueur virtuel 30 dans l'environnement virtuel EV, comme illustré sur la figure 1.

Dans une étape I4, l'équipement d'utilisateur 20 génère au moins une image de l'environnement réel ER.

Dans une étape I5, l'équipement d'utilisateur 20 détecte un motif correspondant à au moins une partie du marqueur réel 10 dans l'au moins une image générée, le motif étant de préférence prédéfini dans l'équipement d'utilisateur 20.

Dans une étape I6, l'équipement d'utilisateur 20 détermine la position du motif détecté comme étant la position de référence ER(0) de l'environnement réel ER.

Le procédé selon l'invention nécessite ensuite une phase de conception PC.

Dans une étape C1 un concepteur ou l'utilisateur 21 de l'équipement d'utilisateur 20 aménage la scène virtuelle en y ajoutant des objets virtuels 41, 42, 43, 44.

Dans une étape C2, l'équipement d'utilisateur 20 détermine la position virtuelle de chaque objet virtuel 41, 42, 43, 44 dans l'environnement virtuel EV par rapport au marqueur virtuel 30. Dans le cas où l'aménagement a été réalisé par un concepteur via une application qui est hors de l'équipement d'utilisateur 20, l'équipement d'utilisateur 20 peut recevoir la position des objets virtuels 41, 42, 43, 44 (coordonnées) ou bien recevoir l'aménagement et déterminer la position des objets virtuels 41, 42, 43, 44 (coordonnées).

Dans une étape C3, l'équipement d'utilisateur 20 calcule (ou reçoit) la position réelle correspondant à la position de chaque objet virtuel 41, 42, 43, 44, définie par rapport à la position de référence ER(0) prédéterminée dans l'environnement réel ER.

Ensuite, dans une phase d'utilisation PU, l'équipement d'utilisateur 20 génère dans une étape U1 un flux vidéo comportant des images représentant l'environnement réel ER puis intègre dans une étape U2 une représentation de chaque objet virtuel 41, 42, 43, 44 à la position réelle calculée dans les images du flux vidéo généré. Il va de soi que seules les représentations des objets virtuels 41, 42, 43, 44 situées dans une zone représentée sur les images peuvent apparaître sur lesdites images.

L'équipement d'utilisateur 20 affiche sur son écran 22 en temps réel, dans une étape U3, le flux vidéo comportant les représentations des objets virtuels 41, 42, 43, 44 intégrées.

Dans un mode de réalisation, le procédé comprend l'obtention d'au moins une donnée relative à au moins un objet réel ou virtuel et l'affichage d'au moins une donnée avec la représentation de l'objet virtuel 41, 42, 43, 44 dans le flux vidéo, par exemple de manière superposée ou adjacente. L'au moins une donnée relative à au moins un objet peut être obtenue dans une base de données ou bien reçue de l'objet lui-même. Par exemple, le prix d'un objet, réel ou virtuel, peut être affiché sur ou à côté de l'objet dans les images du flux vidéo. Par exemple, un ou plusieurs objets réels peuvent être des objets connectés et le procédé peut comprendre l'envoi par chaque objet réel connecté à l'équipement d'utilisateur 20 d'au moins une donnée et l'affichage par ledit équipement d'utilisateur 20, lors de l'étape U3, de l'au moins une donnée avec la représentation de l'objet virtuel 41, 42, 43, 44 dans le flux vidéo, par exemple en superposition ou à côté de l'objet connecté.

Avec l'invention, l'utilisateur peut ainsi visualiser en temps réel la scène réelle augmentée des objets 3D, ceux-ci étant avantageusement positionnés en permanence de manière précise par rapport à la position de référence prédéterminée.

## Revendications

1. Procédé d'intégration en temps réel d'au moins un objet virtuel (41, 42, 43, 44) dans un flux vidéo généré par un équipement d'utilisateur (20) et représentant un environnement réel (ER), ledit objet virtuel (41, 42, 43, 44) étant défini dans un environnement virtuel (EV) et étant **caractérisé par** sa position dite « virtuelle », ladite position virtuelle étant définie par rapport à un marqueur virtuel (30) placé dans ledit environnement virtuel (EV), dans un repère spatial tridimensionnel ayant la position dudit marqueur virtuel pour origine, ledit procédé comprenant les étapes, mises en œuvre par ledit équipement d'utilisateur (20), de :
- calcul (C3) de la position dite « réelle », dans l'environnement réel (ER), d'une représentation de l'au moins un objet virtuel (41, 42, 43, 44) par rapport à une position de référence prédéterminée correspondant, dans l'environnement réel (ER), à la position du marqueur virtuel (30) dans l'environnement virtuel (EV),
- intégration (U2) de la représentation de l'au moins un objet virtuel (41, 42, 43, 44) dans un flux vidéo généré à la position réelle calculée,
- affichage (U3) du flux vidéo de sorte que ladite représentation apparaisse en temps réel sur les images du flux vidéo généré à la position réelle calculée, ledit procédé comprenant une phase préliminaire comportant les
étapes de :
- génération (I1) d'un modèle 3D représentant l'environnement virtuel (EV),
- placement (I2) d'un marqueur virtuel (30) dans l'environnement virtuel (EV) généré,
- placement (I3) d'un marqueur réel (10) dans l'environnement réel (ER) à l'emplacement correspondant à celui du marqueur virtuel (30) dans l'environnement virtuel (EV),
- génération (I4) d'au moins une image de l'environnement réel (ER) correspondant à l'environnement virtuel (EV) et comportant le marqueur réel (10),
- détection (I5) d'un motif correspondant au moins à une partie du marqueur réel (10) dans l'au moins une image générée afin de localiser le marqueur réel (10), le motif étant prédéfini dans l'application,
- détermination (I6) de la position du motif détecté comme étant la position de référence de l'environnement réel (ER),
et en ce que ledit procédé comprend en outre :
- la détection d'un objet réel (25, 26, 27, 28, 29) ajouté ou déplacé dans l'environnement réel (ER) en utilisant un module d'intelligence artificielle pour lier l'objet à un modèle d'objet 3D préexistant dans le modèle 3D d'environnement, ou un QR code sur l'objet, ou un scan de l'objet pour créer en direct le modèle 3D de l'objet,
- la détermination de la position réelle de l'objet réel (25, 26, 27, 28, 29) ajouté ou déplacé par rapport à la position de référence prédéterminée, la détermination de la position virtuelle de l'objet réel (25, 26, 27, 28, 29) ajouté ou déplacé correspondant à la position réelle déterminée et
- la mise à jour de l'environnement virtuel (EV) à partir de la position virtuelle déterminée de l'objet virtuel (41, 42, 43, 44) correspondant à l'objet réel

2. Procédé selon la revendication précédente, dans lequel la génération de l'environnement virtuel (EV) est réalisée via une application dédiée ou via un scan de l'environnement réel (ER) correspondant.

3. Procédé selon l'une quelconque des revendications précédentes, dans lequel, le procédé comprend l'obtention d'au moins une donnée relative à au moins un objet, réel (25, 26, 27, 28, 29) ou virtuel (41, 42, 43, 44), et l'affichage par l'équipement d'utilisateur (20) de l'au moins une donnée sur ou à côté dudit objet dans le flux vidéo.

4. Produit programme d'ordinateur **caractérisé en ce qu'**il comporte un ensemble d'instructions de code de programme qui, lorsqu'elles sont exécutées par un ou plusieurs processeurs, configurent le ou les processeurs pour mettre en œuvre un procédé selon l'une quelconque des revendications précédentes.

5. Equipement d'utilisateur (20) pour l'intégration en temps réel d'au moins un objet virtuel (41, 42, 43, 44) dans un flux vidéo généré par ledit équipement d'utilisateur (20) et représentant un environnement réel (ER), ledit objet virtuel (41, 42, 43, 44) étant défini dans un environnement virtuel (EV) et étant **caractérisé par** sa position dite « virtuelle », ladite position virtuelle étant définie par rapport à un marqueur virtuel (30) placé dans ledit environnement virtuel (EV), dans un repère spatial tridimensionnel ayant la position dudit marqueur virtuel pour origine, l'équipement d'utilisateur (20) étant configuré pour :
- calculer la position dite « réelle », dans l'environnement réel (ER), d'une représentation de l'au moins un objet virtuel (41, 42, 43, 44) par rapport à une position de référence prédéterminée correspondant, dans l'environnement réel (ER), à la position du marqueur virtuel dans l'environnement virtuel (EV),
- intégrer la représentation de l'au moins un objet virtuel (41, 42, 43, 44) dans un flux vidéo généré à la position réelle calculée,
- afficher le flux vidéo de sorte que ladite représentation apparaisse en temps réel sur les images du flux vidéo généré à la position réelle calculée ledit équipement d'utilisateur (20) étant configuré pour, dans une phase
préliminaire :
- générer un modèle 3D représentant l'environnement virtuel (EV),
- placer un marqueur virtuel (30) dans l'environnement virtuel (EV) généré,
- générer au moins une image de l'environnement réel (ER) correspondant à l'environnement virtuel (EV) et comportant un marqueur réel (10) à l'emplacement correspondant à celui du marqueur virtuel (30) dans l'environnement virtuel (EV),
- détecter un motif correspondant au moins à une partie du marqueur réel (10) dans l'au moins une image générée afin de localiser le marqueur réel (10), le motif étant prédéfini dans l'application,
- déterminer la position du motif détecté comme étant la position de référence de l'environnement réel (ER), et
en ce que ledit équipement utilisateur (20) est en outre configuré pour :
- détecter un objet ajouté ou déplacé dans l'environnement réel (ER), pour déterminer la position réelle de l'objet ajouté ou déplacé par rapport à la position de référence prédéterminée en utilisant un module d'intelligence artificielle pour lier l'objet à un modèle d'objet 3D préexistant dans le modèle 3D d'environnement, ou un QR code sur l'objet, ou un scan de l'objet pour créer en direct le modèle 3D de l'objet,
- déterminer la position virtuelle de l'objet ajouté ou déplacé correspondant à la position réelle déterminée et
- mettre à jour l'environnement virtuel (EV) à partir de la position virtuelle déterminée de l'objet virtuel (41, 42, 43, 44) correspondant à l'objet réel.

6. Equipement d'utilisateur (20) selon la revendication 5, ledit équipement d'utilisateur (20) étant configuré pour recevoir au moins une donnée relative à au moins un objet, réel (25, 26, 27, 28, 29) ou virtuel (41, 42, 43, 44), et pour afficher l'au moins une donnée sur ou à côté dudit objet dans le flux vidéo.

7. Système (1) de réalité augmentée comprenant au moins un marqueur réel (10) disposé dans un environnement réel (ER) et un équipement d'utilisateur (20) selon l'une quelconque des revendications 5 à 6.

## Patentansprüche

1. Verfahren für die Echtzeit-Integration mindestens eines virtuellen Objekts (41, 42, 43, 44) in einen Videostream, der von einer Benutzereinrichtung (20) erzeugt wird und eine reale Umgebung (ER) darstellt, wobei das virtuelle Objekt (41, 42, 43, 44) in einer virtuellen Umgebung (EV) definiert und durch seine "virtuelle" Position gekennzeichnet ist, wobei die virtuelle Position relativ zu einer virtuellen Marke (30), die in der virtuellen Umgebung (EV) platziert ist, in einem dreidimensionalen räumlichen Bezugssystem, das die Position der virtuellen Marke als Ursprung aufweist, definiert ist, das Verfahren umfassend die folgenden Schritte, die durch die Benutzereinrichtung (20) implementiert werden:
- Berechnen (C3) der "realen" Position einer Abbildung des mindestens einen virtuellen Objekts (41, 42, 43, 44) in der realen Umgebung (ER) relativ zu einer vorbestimmten Referenzposition, die in der realen Umgebung (ER) der Position der virtuellen Marke (30) in der virtuellen Umgebung (EV) entspricht,
- Integrieren (U2) der Abbildung des mindestens einen virtuellen Objekts (41, 42, 43, 44) in einen erzeugten Videostream an der berechneten realen Position,
- Anzeigen (U3) des Videostreams, so dass die Abbildung in Echtzeit auf den Bildern des erzeugten Videostreams an der berechneten realen Position erscheint,
wobei das Verfahren eine Vorbereitungsphase umfasst, umfassend die folgenden Schritte:
- Erzeugen (I1) eines die virtuelle Umgebung (EV) darstellenden 3D-Modells,
- Platzieren (I2) einer virtuellen Marke (30) in der erzeugten virtuellen Umgebung (EV),
- Platzieren (I3) einer realen Marke (10) in der realen Umgebung (ER) an der Position, die der der virtuellen Marke (30) in der virtuellen Umgebung (EV) entspricht,
- Erzeugen (I4) mindestens eines Bildes der realen Umgebung (ER), das der virtuellen Umgebung (EV) entspricht und die reale Marke (10) umfasst,
- Detektieren (I5) eines Musters, das mindestens einem Teil der realen Marke (10) in dem mindestens einen erzeugten Bild entspricht, um die reale Marke (10) zu lokalisieren, wobei das Muster in der Anwendung vordefiniert ist,
- Bestimmen (I6) der Position des detektierten Musters als die Referenzposition der realen Umgebung (ER),
und dass das genannte Verfahren ferner umfasst:
- Detektieren eines in der realen Umgebung (ER) hinzugefügten oder bewegten realen Objekts (25, 26, 27, 28, 29) unter Verwendung eines Moduls der künstlichen Intelligenz, um das Objekt mit einem in dem 3D-Umgebungsmodell bereits vorhandenen 3D-Objektmodell zu verknüpfen, oder eines QR-Codes auf dem Objekt oder eines Scans des Objekts, um das 3D-Modell des Objekts in Echtzeit zu erstellen,
- Bestimmen der realen Position des hinzugefügten oder bewegten realen Objekts (25, 26, 27, 28, 29) relativ zu der vorbestimmten Referenzposition, Bestimmen der virtuellen Position des hinzugefügten oder bewegten realen Objekts (25, 26, 27, 28, 29) entsprechend der bestimmten realen Position, und
- Aktualisieren der virtuellen Umgebung (EV) anhand der bestimmten virtuellen Position des virtuellen Objekts (41, 42, 43, 44), das dem realen Objekt entspricht.

2. Verfahren nach dem vorstehenden Anspruch, wobei das Erzeugen der virtuellen Umgebung (EV) über eine dedizierte Anwendung oder über einen Scan der entsprechenden realen Umgebung (ER) erfolgt.

3. Verfahren nach einem der vorstehenden Ansprüche, wobei das Verfahren das Erhalten mindestens eines Datenelements in Bezug auf mindestens ein reales (25, 26, 27, 28, 29) oder virtuelles (41, 42, 43, 44) Objekt und das Anzeigen des mindestens einen Datenelements auf oder neben dem Objekt in dem Videostream durch die Benutzereinrichtung (20) umfasst.

4. Computerprogrammprodukt, **dadurch gekennzeichnet, dass** es einen Satz von Programmcodeanweisungen umfasst, die, wenn sie von einem oder mehreren Prozessoren ausgeführt werden, den oder die Prozessoren dazu konfigurieren, ein Verfahren nach einem der vorstehenden Ansprüche zu implementieren.

5. Benutzereinrichtung (20) für die Echtzeit-Integration mindestens eines virtuellen Objekts (41, 42, 43, 44) in einen Videostream, der von der Benutzereinrichtung (20) erzeugt wird und eine reale Umgebung (ER) darstellt, wobei das virtuelle Objekt (41, 42, 43, 44) in einer virtuellen Umgebung (EV) definiert ist und durch seine "virtuelle" Position gekennzeichnet ist, wobei die virtuelle Position relativ zu einer virtuellen Marke (30), die in der virtuellen Umgebung (EV) platziert ist, in einem dreidimensionalen räumlichen Bezugssystem, das die Position der virtuellen Marke als Ursprung aufweist, definiert ist, wobei die Benutzereinrichtung (20) konfiguriert ist zum:
- Berechnen der "realen" Position einer Abbildung des mindestens einen virtuellen Objekts (41, 42, 43, 44) in der realen Umgebung (ER) relativ zu einer vorbestimmten Referenzposition, die in der realen Umgebung (ER) der Position der virtuellen Marke in der virtuellen Umgebung (EV) entspricht,
- Integrieren der Abbildung des mindestens einen virtuellen Objekts (41, 42, 43, 44) in einen erzeugten Videostream an der berechneten realen Position,
- Anzeigen des Videostreams, so dass die Abbildung in Echtzeit auf den Bildern des erzeugten Videostreams an der berechneten realen Position erscheint,
wobei die Benutzereinrichtung (20) dazu konfiguriert ist, in einer Vorbereitungsphase Folgendes auszuführen:
- Erzeugen eines 3D-Modells, das die virtuelle Umgebung (EV) darstellt,
- Platzieren einer virtuellen Marke (30) in der erzeugten virtuellen Umgebung (EV),
- Erzeugen mindestens eines Bildes der realen Umgebung (ER), die der virtuellen Umgebung (EV) entspricht und an der Stelle, die der der virtuellen Marke (30) in der virtuellen Umgebung (EV) entspricht, eine reale Marke (10) enthält,
- Detektieren eines Musters, das mindestens einem Teil der realen Marke (10) in dem mindestens einen erzeugten Bild entspricht, um die reale Marke (10) zu lokalisieren, wobei das Muster in der Anwendung vordefiniert ist,
- Bestimmen der Position des detektierten Musters als die Referenzposition der realen Umgebung (ER), und
dass die Benutzereinrichtung (20) ferner konfiguriert ist zum:
- Detektieren eines in der realen Umgebung (ER) hinzugefügten oder bewegten Objekts unter Verwendung eines Moduls der künstlichen Intelligenz, um die reale Position des hinzugefügten oder bewegten Objekts relativ zu der vorbestimmten Referenzposition zu bestimmen, um das Objekt mit einem in dem 3D-Umgebungsmodell bereits vorhandenen 3D-Objektmodell zu verknüpfen, oder eines QR-Codes auf dem Objekt oder eines Scans des Objekts, um das 3D-Modell des Objekts in Echtzeit zu erstellen,
- Bestimmen der virtuellen Position des hinzugefügten oder bewegten Objekts, die der bestimmten realen Position entspricht, und
- Aktualisieren der virtuellen Umgebung (EV) anhand der bestimmten virtuellen Position des virtuellen Objekts (41, 42, 43, 44), das dem realen Objekt entspricht.

6. Benutzereinrichtung (20) nach Anspruch 5, wobei die Benutzereinrichtung (20) dazu konfiguriert ist, mindestens ein Datenelement in Bezug auf mindestens ein reales (25, 26, 27, 28, 29) oder virtuelles (41, 42, 43, 44) Objekt zu empfangen und das mindestens eine Datenelement auf oder neben dem Objekt in dem Videostream anzuzeigen.

7. System (1) der erweiterten Realität, umfassend mindestens ein reale Marke (10), die in einer realen Umgebung (ER) angeordnet ist, und eine Benutzereinrichtung (20) nach einem der Ansprüche 5 bis 6.

## Claims

1. Method for real time integration of at least one virtual object (41, 42, 43, 44) into a video stream generated by a user apparatus (20) and representing a real environment (ER), said virtual object (41, 42, 43, 44) being defined in a virtual environment (EV) and being **characterized by** a so-called "virtual" position thereof, said virtual position being defined with respect to a virtual marker (30) placed in said virtual environment (EV), in a three-dimensional spatial frame of reference having the position of said virtual marker as an origin, said method comprising the steps, implemented by said user apparatus (20), of:
- calculating (C3) the so-called "real" position, in the real environment (ER), of a representation of the at least one virtual object (41, 42, 43, 44) with respect to a predetermined reference position corresponding, in the real environment (ER), to the position of the virtual marker (30) in the virtual environment (EV),
- integrating (U2) the representation of the at least one virtual object (41, 42, 43, 44) into a video stream generated at the calculated real position,
- displaying (U3) the video stream so that said representation appears in real time at the calculated real position on the frames of the generated video stream,
said method comprising a preliminary phase having the steps of:
- generating (I1) a 3D model representing the virtual environment (EV),
- placing (I2) a virtual marker (30) in the generated virtual environment (EV),
- placing (I3) in the real environment (ER) a real marker (10) at the site corresponding to that of the virtual marker (30) in the virtual environment (EV),
- generating (I4) at least one image of the real environment (ER), which image corresponds to the virtual environment (EV) and includes the real marker (10),
- detecting (I5) a pattern corresponding at least to a portion of the real marker (10) in the at least one generated image in order to locate the real marker (10), the pattern being predefined in the application,
- determining (I6) the position of the detected pattern as being the reference position of the real environment (ER),
and **in that** said method further comprises:
- detecting a real object (25, 26, 27, 28, 29) which has been added or moved in the real environment (ER), by using an artificial intelligence module to link the object to a preexisting 3D object model in the 3D environment model, or by a QR code on the object, or by a scan of the object to create the 3D model of the object in a live manner,
- determining the real position of the added or moved real object (25, 26, 27, 28, 29) with respect to the predetermined reference position, determining the virtual position of the added or moved real object (25, 26, 27, 28, 29) corresponding to the determined real position; and
- updating the virtual environment (EV) based on the determined virtual position of the virtual object (41, 42, 43, 44) corresponding to the real object

2. Method according to the preceding claim, wherein the generation of the virtual environment (EV) is realized by means of a dedicated application or by means of a scan of the corresponding real environment (ER).

3. Method according to any of the preceding claims, wherein the method comprises obtaining at least one data item relating to at least one real object (25, 26, 27, 28, 29) or to at least one virtual object (41, 42, 43, 44), and displaying by means of the user apparatus (20) the at least one data item on or next to said object in the video stream.

4. Computer program product, **characterized in that** it comprises a set of program code instructions which, when executed by one or more processors, configure the processor(s) to implement a method according to any of the preceding claims.

5. User apparatus (20) for real time integration of at least one virtual object (41, 42, 43, 44) into a video stream generated by said user apparatus (20) and representing a real environment (ER), said virtual object (41, 42, 43, 44) being defined in a virtual environment (EV) and being **characterized by** the so-called "virtual" position thereof, said virtual position being defined with respect to a virtual marker (30) placed in said virtual environment (EV), in a three-dimensional spatial frame of reference having the position of said virtual marker as the origin, the user apparatus (20) being configured to:
- calculate the so-called "real" position in the real environment (ER) of a representation of the at least one virtual object (41, 42, 43, 44) with respect to a predetermined reference position corresponding in the real environment (ER) to the position of the virtual marker in the virtual environment (EV),
- integrate into a generated video stream the representation of at least one virtual object (41, 42, 43, 44) at the calculated real position,
- display the video stream so that said representation appears in real time at the calculated real position on the frames of the generated video stream,
said user apparatus (20) being configured to do the following in a preliminary phase:
- generate a 3D model representing the virtual environment (EV),
- place a virtual marker (30) in the generated virtual environment (EV),
- generate at least one image of the real environment (ER), which image corresponds to the virtual environment (EV) and includes a real marker (10) at the site corresponding to that of the virtual marker (30) in the virtual environment (EV),
- detect a pattern corresponding at least to a portion of the real marker (10) in the at least one generated image in order to locate the real marker (10), the pattern being predefined in the application,
- determine the position of the detected pattern as being the reference position of the real environment (ER), and
**in that** said user apparatus (20) is further configured to:
- detect an object which has been added or moved in the real environment (ER), in order to determine the real position of the added or moved object with respect to the predetermined reference position by using an artificial intelligence module to link the object to a preexisting 3D object model in the 3D environment model, or by using a QR code on the object, or by using a scan of the object to create the 3D model of the object in a live manner,
- determine the virtual position of the added or moved object corresponding to the determined real position, and
- update the virtual environment (EV) on the basis of the determined virtual position of the virtual object (41, 42, 43, 44) corresponding to the real object.

6. User apparatus (20) according to claim 5, said user apparatus (20) being configured to receive at least one data item relating to at least one real object (25, 26, 27, 28, 29) or to at least one virtual object (41, 42, 43, 44), and to display the at least one data item on or next to said object in the video stream.

7. Augmented reality system (1) comprising at least one real marker (10) arranged in a real environment (ER) and a user apparatus (20) according to any of claims 5 to 6.
